# EUROPÄISCHE PATENTANMELDUNG

(11) **EP 2 196 304 A1**
(43) Veröffentlichungstag der Anmeldung: **16.06.2010**
(21) Anmeldenummer: 09015366.9
(22) Anmeldetag: 11.12.2009
(51) Int. Cl.: B29C 65/78, B29C 65/20, E06B 3/96

(54) **Verfahren und Vorrichtung für das Verschweissen von Profilstäben aus Kunststoff**

(30) Priorität: 12.12.2008 DE 102008061708; 25.05.2009 DE 102009022556
(71) Anmelder: Urban GmbH & Co. Maschinenbau KG, 87700 Memmingen (DE)
(72) Erfinder: Tesch, Wolfgang, 87751 Heimertingen (DE)
(74) Vertreter: Schulz, Manfred

(57) **Zusammenfassung**

Die Erfindung betrifft eine Vorrichtung für das Verschweißen von mindestens zwei an ihren Verbindungsenden auf Gehrung geschnittenen Profilstäben (2) aus Kunststoff. Sie dienen zur Bildung eines Tür- oder Fensterrahmens (5) oder eines Rahmenteils eines Tür- oder Fensterrahmens. Die Vorrichtung umfasst einen Schweißkopf. Sie umfasst mindestens einen, jeweils mit den Profilstäben (2) zusammenwirkende, bezüglich des zu bildenden Rahmens (5) beziehungsweise Rahmenteiles außenliegenden Außenanschlages (3) und mindestens einen bezüglich des zu bildenden Rahmens (5) beziehungsweise Rahmenteiles auf der Innenseite liegenden Innenanschlag (4), wobei der Innenanschlag (4) von der Innenseite entfernbar ist.

## Beschreibung

Die Erfindung betrifft ein Verfahren beziehungsweise eine Vorrichtung für das Verschweißen von mindestens zwei, an ihren Verbindungsenden auf Gehrung geschnittenen Profilstäben aus Kunststoff, die zur Bildung eines Tür- oder Fensterrahmens oder eines Rahmenteiles eines Tür- oder Fensterrahmens dienen. Die Herstellung von Tür- oder Fensterrahmen beziehungsweise entsprechenden Rahmenteilen aus miteinander verschweißten Profilstäben aus Kunststoff ist hinlänglich bekannt. Dabei werden die Profilstäbe unter Berücksichtigung eines entsprechenden Abschmelzverlustes, der beim Verschweißen der Profilstäbe auftritt, auf Maß und Gehrung geschnitten und dann in eine Vorrichtung, wie eingangs beschrieben, eingelegt und dort verschweißt.

Sowohl bei Türen, wie auch bei Fenstern sind zwei verschiedene Rahmentypen üblich. Zunächst wird der Stock- oder Blendrahmen in die Maueröffnung eingesetzt, der dann den Flügelrahmen, also das bewegliche Element des Fensters oder der Türe aufnimmt.

Zwischen dem Flügelrahmen und dem Blendrahmen ist eine an dem Rahmen umlaufende Kammer vorgesehen, die zur Aufnahme der Beschläge dient. Für einen möglichst passgenauen Einbau der Beschläge ist es notwendig, dass das Kammermaß, also der Abstand zwischen der außenliegenden, umlaufenden Kante des Flügelfalzes und der umlaufende Kante des innenliegenden Blendrahmenfalzes eine sehr kleine Maßtoleranz einhält. Dabei ist zu beachten, dass die aus Kunststoff extrudierten Profilstäbe herstellungsbedingt erhebliche Profilbreitentoleranzen aufweisen und die Profilbreitentoleranzen nicht das Kammermaß beeinträchtigen dürfen.

Daher ist es im Stand der Technik bekannt, die Blendrahmen bezüglich des Bezugmaßes am Innenfalz herzustellen. Dadurch gelingt es, die Profilbreitentoleranz an das Außenmaß und somit in die Einbauöffnung in der Mauer zu verlagern.

Der Flügelrahmen hingegen hat sein Bezugsmaß am Außenfalz, da er hier mit dem Blendrahmen zusammenwirkt. Auftretende Profilbreitentoleranzen werden in das Innenmaß verlagert, wo diese im Falz zur Glasscheibe oder zu anderen Füllungen hin, ohne Probleme kompensiert werden.

So ergibt es sich, dass nach dem Stand der Technik Blendrahmen nach ihren Blendrahmeninnenmaß hergestellt werden, wobei entsprechende Vorrichtungen mit Innenanschlägen ausgestattet sind, die bezüglich des zu bildenden Rahmens auf der Innenseite angeordnet sind.

Dahingegen sind Maschinen mit Außenanschlägen (bezogen auf die Außenseite des Rahmens) bekannt, die zur Herstellung der Flügelrahmen dienen.

So sind im Stand der Technik zwei verschiedene Maschinenkonzepte bekannt, was die Herstellung entsprechender Rahmen unnötig verteuert, da beide Maschinentypen für die Produktion eines Fensters oder einer Türe benötigt werden.

Es ist daher Aufgabe der Erfindung den Stand der Technik, wie eingangs beschrieben, zu verbessern.

Zur Lösung dieser Aufgabe schlägt die Erfindung eine Vorrichtung für das Verschweißen von mindestens zwei, an ihren Verbindungsenden auf Gehrung geschnittenen Profilstäben aus Kunststoff vor, die zur Bildung eines Tür- oder Fensterrahmens oder eines Rahmenteiles eines Tür- oder Fensterrahmens dienen. Die Vorrichtung weist mindestens einen Schweißkopf auf sowie mindestens einen, jeweils mit den Profilstäben zusammenwirkenden, bezüglich des zu bildenden Rahmens beziehungsweise Rahmenteils, an den Profilstäben außenanliegenden Außenanschlages und mindestens einen, bezüglich des zu bildenden Rahmens beziehungsweise Rahmenteils, auf der Innenseite an den Profilstäben anliegenden Innenanschlages auf, wobei der Innenanschlag von der Innenseite entfernbar ist.

Der Pfiff der Erfindung liegt darin, dass mit einer Maschine nun sowohl Rahmen bezüglich deren Anlage an einem Außenanschlag wie auch bezüglich an einem Innenanschlag hergestellt werden können. Im Stand der Technik war die Bearbeitung bezüglich des Innenanschlages immer ungünstig, da der Innenanschlag auf der Rahmeninnenseite den möglichen Bearbeitungsraum einengt und eine Bearbeitung daher sehr erschwert. Auch behindert der Innenanschlag das Ausfördern des fertiggestellten Rahmens oder Rahmenteiles. Die Erfindung kombiniert die beiden bekannten Maschinentypen in geschickter Weise miteinander, da in jedem Fall der Außenanschlag für eine exakte Positionierung der zu verbindenden Profilstäbe zur Verfügung steht und der Innenanschlag, wenn dieser nicht mehr benötigt wird, von der Innenseite entfernt wird und so diesen Raum zum Beispiel für andere Aggregate oder Bearbeitungswerkzeuge freimacht. Dabei ist die Vorrichtung in bekannter Weise bezüglich der Außenanschläge zu positionieren, wie dies zum Beispiel bei der Herstellung von entsprechenden Flügelrahmen hinlänglich bekannt ist.

Wird ein Rahmen hergestellt, der bezüglich seines Innenmaßes definiert ist, so kommen zuerst die Innenanschläge zum Einsatz, gegen die die Profilstäbe dann angelegt werden, also mit diesen zusammenwirken. Gegen den so eingelegten Profilstab wird dann der Außenanschlag gegen den Profilstab in Anlage gebracht, wirkt also mit diesem ebenfalls zusammen, und übernimmt so exakt die Bearbeitungsposition, wie wenn der Rahmen beziehungsweise das Rahmenteil bezüglich des Außenanschlages zu bearbeiten wäre, jedoch kompensiert diese Anordnung automatisch mögliche Profiltoleranzen, da die Positionierung des Außenanschlages in Abhängigkeit der Lage des Innenanschlages und der jeweiligen Profilbreite erfolgt. Ist dann in diesem vorgeschilderten Anwendungsfall die richtige Position des Profiles von dem Innenanschlag auf den Außenanschlag übergeben, wird der Innenanschlag von der Innenseite entfernt.

Für das Entfernen des Innenanschlages von der Innenseite gibt es eine Vielzahl von Möglichkeiten. In einer einfachsten Variante können die Innenanschläge unter einer einfachen Führung händisch herausgezogen werden oder aber der Innenanschlag wird motorisch angetrieben aus der Innenseite wegbewegt.

Die Vorteile einer solchen Vorrichtung sind erheblich. Es wird eine universell einsetzbare Schweißmaschine oder Vorrichtung für das Verschweißen von entsprechenden Kunststoffprofilen zur Verfügung gestellt, bei welcher durch einfache Programmauswahl entweder auf die lichte Weite, also das Innenmaß oder das Außenmaß abgestellt werden kann. Eine solche erfindungsgemäße Vorrichtung kombiniert zwei ansonsten im Stand der Technik vorgesehene Schweißmaschinen in sich, was zu einer erheblichen Reduktion der Investitionskosten in den Maschinenpark für solche Vorrichtungen führt.

In einer bevorzugten Ausgestaltung der Erfindung ist vorgesehen, dass der Innenanschlag und/oder der Außenanschlag im Bereich der Verbindungsenden des Profilstabes mit diesem zusammenwirkt. Die Anordnung ist dabei so getroffen, dass natürlich der entsprechende Anschlag an der jeweiligen Referenzlängskante des Profilstabes anliegt, dies aber eben im Endbereich des Profilstabes an dessen Verbindungsenden, die auf Gehrung geschnitten sind. Dabei sind die Anschläge ausreichend beweglich, und zwar bevorzugt in zwei Richtungen die parallel sind zu der Ebene des zu schweißenden Rahmens oder Rahmenteiles. Somit werden sowohl verhältnismäßig kurze wie auch verhältnismäßig lange Profilstäbe von dem jeweiligen Anschlag optimal unterstützt.

Des Weiteren sieht die Erfindung vor, dass für den Innenanschlag ein Bewegungs- oder Schwenkantrieb vorgesehen ist, durch dessen Aktivierung der Innenanschlag von der Innenseite des Profilstabes entfernbar ist. Erfindungsgemäße Vorrichtungen werden insbesondere als automatisch laufende Fertigungsanlagen eingesetzt. In einem solchen Fall ist in der Steuerung ein entsprechender Verfahrensschritt vorgesehen, um den Innenanschlag von der Innenseite zu entfernen. Daneben ist natürlich auch ein händisches Entfernen, zum Beispiel ein Herunterklappen unter die Tischebene und so weiter erfindungsgemäß vorgesehen.

Für das Entfernen des Innenanschlages von der Innenseite bestehen dabei eine Vielzahl von Möglichkeiten. So kann zum Beispiel der Innenanschlag nach oben oder nach unten linear bewegt oder zum Beispiel auf einer Kreisbahn geschwenkt werden.

Eine Schwenkbewegung ist insbesondere einfach zu realisieren, da hierzu nur der Innenanschlag drehbar gelagert werden muss und mit einem entsprechenden Schwenkantrieb auszustatten ist.

Es ist ein wesentlicher Vorzug der erfindungsgemäßen Vorrichtung, dass diese wahlweise zur Herstellung von auf Rahmeninnenmaß gefertigte Rahmen oder auf Rahmenaußenmaß zu fertigende Rahmen dient. Die Auswahl wird dabei in der Maschinensteuerung vom Anwender vorgenommen, die erfindungsgemäße Vorrichtung erlaubt es daher, Blendrahmen, die bezüglich ihres Rahmeninnenmaßes maßgenau zu fertigen sind, ebenso herzustellen wie Flügelrahmen, die bezüglich des Flügelrahmenaußenmaßes maßgenau zu produzieren sind.

Wird eine Auswahl getroffen, bei welcher von dem Rahmenaußenmaß auszugehen ist, so wird die erfindungsgemäße Vorrichtung wie eine herkömmliche, mit Außenanschlägen ausgestattete Vorrichtung betrieben, wird die Herstellung eines auf das Innenmaß bezogenen Rahmens gewünscht, so werden zunächst die Innenanschläge auf die gewünschten Positionen gebracht, die Profilstäbe hiergegen angelegt und dann die Außenanschläge gegen den Profilstab positioniert, damit der Außenanschlag das gewünschte Bearbeitungsmaß übernimmt. Dabei wird dann der Außenanschlag entsprechend gebremst. Dabei befindet sich in diesem Bearbeitungsmodus der Profilstab kraftschlüssig (also spielfrei) zwischen dem Innenanschlag und dem Außenanschlag, um so das jeweilige, als Innenmaß vorgegebene Bearbeitungsmaß, unter Berücksichtigung der Profilbreite, auf die Lage des Außenanschlages zu übertragen.

Erreicht wird dies insbesondere dadurch, dass in einer erfindungsgemäßen Variante der Außenanschlag von außen gegen den am Innenanschlag anliegenden Profilstab anstellbar ist und in dieser Position der Außenanschlag durch eine Bremse in seiner Lage festlegbar ist. Durch diesen Schritt "lernt" der Außenanschlag das Außenmaß bei gegebenen Innenmaß und vorgegebener Profilbreite, wobei unabhängig von der Profiltoleranz in diesem Bearbeitungsmodus ein Rahmen mit dem gewünschten Innenmaß resultiert! Hierfür ist der Außenanschlag in geeigneter Weise rechtwinkelig oder schräg (spitzwinkelig zur Längserstreckung des Profilstabes) beweglich auf einer Führungsbahn geführt und auf dieser auch mit Hilfe einer Bremse derart festlegbar, dass die Bearbeitungskräfte, die beim Verschweißen und bei der sonstigen Bearbeitung auftreten, nicht zu einer Maßveränderung führen.

Hierzu ist eine mechanisch oder elektrisch wirkende Bremse vorgesehen, dies können zum Beispiel mechanisch wirkende Haltebremsen oder Haltesysteme sein, dies können auch elektrisch wirkende Blockieranordnungen in Elektromotoren oder dergleichen sein, oder aber es ist als Haltebremse die Kombination eines Getriebes mit einem Elektromotor vorgesehen, bei welchem von dem Elektromotor ein ausreichendes Haltemoment durch das Getriebe entsprechend verstärkt wird.

Für die Verstellung des Außenanschlages sind dabei auch eine Mehrzahl von Varianten erfindungsgemäß vorgesehen, dies können zum Beispiel pneumatisch wirkende Arbeitszylinder sein, an deren Kolbenstange der Außenanschlag angeordnet ist, oder aber es sind Elektromotoren vorgesehen, die in geeigneter Weise den auf einer Führungsbahn beweglich angeordneten Außenanschlag antreiben.

In einer bevorzugten Variante der Erfindung ist vorgesehen, dass die Bewegungen der verschiedenen Außenanschläge unterschiedlich, insbesondere unterschiedlich lang sind. Die Autonomie der einzelnen Außenanschläge untereinander führt zu einem weiteren Vorteil bei der Verwendung der erfindungsgemäßen Vorrichtung. Hierdurch ist es problemlos möglich, ungleich breite Profilstäbe, ohne ansonsten notwendige ausgleichende Beilagen an den Anschlägen, miteinaner zu verschweißen. Ausgehend von einer Grund- oder Startposition der Außenanschläge fahren diese gegebenenfalls unterschiedlich lange Wege, bis diese an den unterschiedlich breiten, zu verschweißenden Profilstäben auf der Außenseite anliegen.

Geschickterweise ist der Außenanschlag in Richtung der Gehrungsfläche längsbeweglich. Hierdurch ist der Außenanschlag in einfacher aber sehr effektiver Weise auf das jeweilige Maß zu positionieren.

Günstigerweise ist der Außenanschlag am Schweißkopf angeordnet. Bei einer solchen Ausgestaltung ist es möglich, dass die Außenanschläge eine Begrenzung des Schweißwulstes im Eckbereich der zu verschweißenden Profilstäbe vornehmen. Durch das Verstellen der Außenanschläge in Gehrungsrichtung ist dies bei jeder Profilbreite möglich.

Für die Lagerung der Profilstäbe bestehen ebenfalls mehrere Varianten, so ist es nach einer erfindungsgemäßen Variante vorgesehen, dass in dem Profilstab ein Trägerschlitten vorgesehen ist und der Trägerschlitten insbesondere rechtwinklig zur Längserstreckung des Profilstabes auf einer Bewegungsbahn beweglich ist. Der Trägerschlitten dient dazu, die Profilstäbe, wenn deren Gehrungsflächen erwärmt sind, für den Verschweißprozess miteinander zusammenzufügen.

Die erfindungsgemäße Aufgabe wird auch durch ein Verfahren für das Verschweißen von mindestens zwei, an ihren Verbindungsenden auf Gehrung geschnittenen Profilstäben aus Kunststoff zur Bildung eines Tür- oder Fensterrahmens oder eines Rahmenteiles eines Tür- oder Fensterrahmens gelöst, wobei der sich bezüglich des zu schweißenden Rahmens oder Rahmenteiles auf der Außenseite angeordnete Außenanschlag in Abhängigkeit der Lage des bezüglich des zu schweißenden Rahmens oder Rahmenteiles auf der Innenseite angeordneten Innenanschlag und der Profilbreite des am Innenanschlag anliegenden Profilstabes positioniert und in dieser Position gebremst wird. Durch diesen Verfahrensschritt ist es möglich, die Lage des Außenanschlages von der Lage des Innenanschlages (beziehungsweise dem von der Herstellung her wichtigen Innenmaß) und der Profilbreite abzuleiten und den Außenanschlag an der gewünschten beziehungsweise ermittelten Position zu positionieren und in diese Position auch mit ausreichend Haltekraft festzulegen, also zu bremsen. Wie nachfolgend in dem weiteren erfindungsgemäßen Verfahren geschildert wird, kann diese Relativpositionierung des Außenanschlages durch direkten mechanischen Kontakt der einzelnen Elemente untereinander erreicht werden. Grundsätzlich ist es auch möglich, mit Hilfe einer entsprechenden Steuerung und einer Vermessstation für die Profilbreite, diese Informationen zu erzeugen.

Des Weiteren wird die erfindungsgemäße Aufgabe durch ein Verfahren für das Verschweißen von mindestens zwei an ihren Verbindungsenden auf Gehrung geschnittenen Profilstäben aus Kunststoff zur Bildung eines Tür- oder Fensterrahmens oder eines Rahmensteils eines Fensterrahmens gelöst, wobei die Profilstäbe zunächst allein bezüglich des zu schweißenden Rahmens oder Rahmenteiles auf den auf der Innenseite angeordneten Innenanschlag angelegt werden, hernach ein bezüglich des zu schweißenden Rahmens oder Rahmenteiles auf der Außenseite angeordneter Außenanschlag gegen den Profilstab bewegt wird und bei Anliegen des Außenanschlages am Profilstab, der Außenanschlag auf seiner Bewegungsbahn an dieser Position gebremst wird, worauf der Innenanschlag von der Innenseite entfernt wird und hernach die Verschweißung der Profilstäbe erfolgt. Eine Vorrichtung, mit welcher die Ausführung des vorgenannten Verfahrens möglich ist, erlaubt auch, dass Rahmen beziehungsweise Rahmenteile hergestellt werden, die nur bezüglich ihres Außenmaßes maßgenau sein müssen. Das Wegbewegen, also Entfernen des Innenanschlages auf der Innenseite, nachdem der Außenanschlag in Abhängigkeit der Lage des Innenanschlages und der Profilbreite positioniert und festgelegt, also gebremst ist, führt dazu, dass der Innenanschlag beim Austransportieren des fertigen Rahmens oder Rahmenteiles nicht stört und der einfach zu beherrschende Schweißvorgang bei Anlage der Profilstäbe an einem Außenanschlag in gewohnter Weise durchgeführt werden kann.

Geschickterweise ist vor dem Verschweißen eine Zentrierung der Profilstäbe vorgesehen, die mit Hilfe von Justierelementen erfolgt, die bevorzugt zum Beispiel an den Außenanschlägen angeordnet sind. Die Justierung kann auch mit Hilfe der Innenanschläge erfolgen, wenn diese entsprechende Justierelemente tragen. Geeigneterweise sind diese Justierelemente aber am Schweißkopf vorgesehen, weil die Justierung erst kurz vor dem eigentlichen Schweißen erfolgt, wodurch es dann unerheblich ist, ob die Profilstäbe bezüglich ihres Innenmaßes oder ihres Außenmaßes zu positionieren sind.

In diesem Zusammenhang wird insbesondere darauf hingewiesen, dass alle im Bezug auf die Vorrichtung beschriebenen Merkmale und Eigenschaften, aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche, also vorrichtungsgemäße Merkmale können auch im Rahmen der Vorrichtungsansprüche berücksichtigt und beansprucht werden und zählen ebenfalls zur Erfindung und zur Offenbarung.

In der Zeichnung ist die Erfindung schematisch dargestellt. Es zeigen:
- Fig. 1a, 1b: in einer Draufsicht (Fig. 1a) beziehungsweise in einer dreidimensionalen Ansicht (Fig. 1b) Profilstäbe in Einlegeposition mit nicht aktiviertem Innenanschlag nach der Erfindung,
- Fig. 2a, 2b, 3a, 3b, 4a, 4b: jeweils in einer Draufsicht (Fig. 2a, 3a, 4a) beziehungsweise in einer dreidimensionalen Ansicht (Fig. 2b, 3b, 4b) verschiedene Positionen des erfindungsgemäßen Verfahrens
und
- Fig. 5: in einer Schnittdarstellung die unterschiedlichen, z. B. bei einer Tür oder Fenster verwendeten Profile, in ihrem eingebauten Zustand;

In den Figuren sind gleiche oder einander entsprechende Elemente jeweils mit den gleichen Bezugszeichen bezeichnet und werden daher, sofern nicht zweckmäßig, nicht erneut beschrieben.

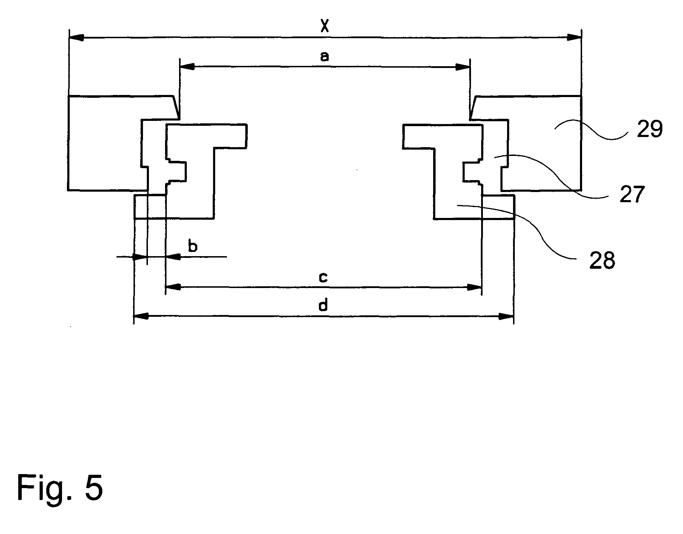

Zum besseren Verständnis der Erfindung wird in Fig. 5 ein Schnitt durch einen Stock- oder Blendrahmen 29 und einem darin angeordneten Flügelrahmen 28 gezeigt. Der Blendrahmen 29 wird in die Gebäudeöffnung eingesetzt und dort befestigt, der Flügelrahmen 28 wird üblicherweise in den Blendrahmen 29 eingesetzt und ist mit Hilfe von Scharnieren hierin drehbar gelagert und durch Verriegelungen in diesen festlegbar. Die notwendigen Beschläge sind in der Kammer 27 vorgesehen.

Um die Fig. 5 nicht mit zusätzlichen Informationen zu überfrachten, ist die hier gewählte Schnittdarstellung nur schematisch gezeigt und nicht vollständig.

Fig. 5 eignet sich aber sehr gut, um die unterschiedlichen Ausgangsmaße bei der Herstellung eines Flügelrahmens 28 oder Blendrahmens 29 zu erläutern.

Entscheident ist ein möglichst genaues Kammermaß b, da in der Kammer 27 die Beschläge einzubauen sind.

Das Kammermaß b hängt ab von dem Flügelrahmenaußenmaß d beziehungsweise dem Flügelfalzmaß c. Desweiteren hängt das Kammermaß b von dem Blendrahmenaußenmaß X beziehungsweise dem Blendrahmeninnenmaß a ab.

Es wurde bereits mehrfach erläutert, dass der Blendrahmen 29 bevorzugt über das Blendrahmeninnenmaß a definiert und produziert wird, wohingegen der Flügelrahmen 28 über sein Flügelrahmenaußenmaß d definiert und hergestellt wird. Dies führt dazu, dass der Blendrahmen 29 über ein Innenmaß, also über die Anordnung von Innenanschlägen, und der Flügelrahmen 28 über sein Außenmaß, also über Außenanschläge hergestellt wird. Dies führte im Stand der Technik zu den geschilderten Problemen.

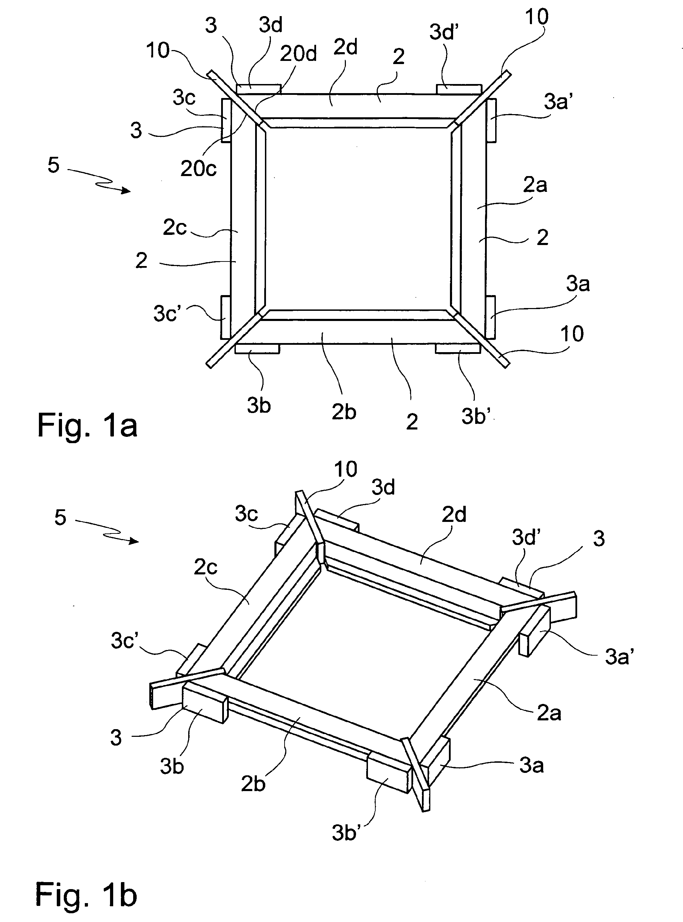

Mit Hilfe der erfindungsgemäßen Vorrichtung ist es problemlos möglich, einen Flügelrahmen, wie in Fig. 1a, 1b gezeigt, herzustellen.

Der hier gezeigte Rahmen 5 besteht aus vier rechteckig zueinander angeordneten und zu verschweißenden Profilstäben 2. Um die Maßhaltigkeit zu erreichen, werden die auf Gehrung abgelängten Profilstäbe 2, 2a, 2b, 2c, 2d an Außenanschlägen 3 wie an Justierplatten 10 angelegt. Dem Profilstab 2d sind die beiden Außenanschläge 3d und 3d', dem Profilstab 2a die Außenanschläge 3a', 3a, dem Profilstab 2b die Außenanschläge 3b und 3b' sowie dem Profilstab 2c die Außenanschläge 3c und 3c' zugeordnet. Die einzelnen Profilstäbe 2a, 2b, 2c, 2d werden über ihre jeweiligen Gehrungsflächen (es werden zwei Gehrungsflächen 20c, 20d beispielhaft beschrieben) durch einen anschließenden Schweißprozess mit Hilfe eines zum Schweißkopf zählenden Schweißspiegels miteinander verbunden. Beim Schweißen nehmen die Schweißspiegel die Position der Justierplatte 10 ein, sie bedecken zudem die ganze Gehrungsfläche.

In Fig. 1b ist die dreidimensionale Ansicht nach Fig. 1a gezeigt. Die hier gezeigte Einlegeposition entspricht dem Beginn des Schweißprozesses. Da der hier zu erstellende Flügelrahmen auf Außenmaß zu produzieren ist, sind die Innenanschläge hier nicht aktiv und auch nicht gezeigt.

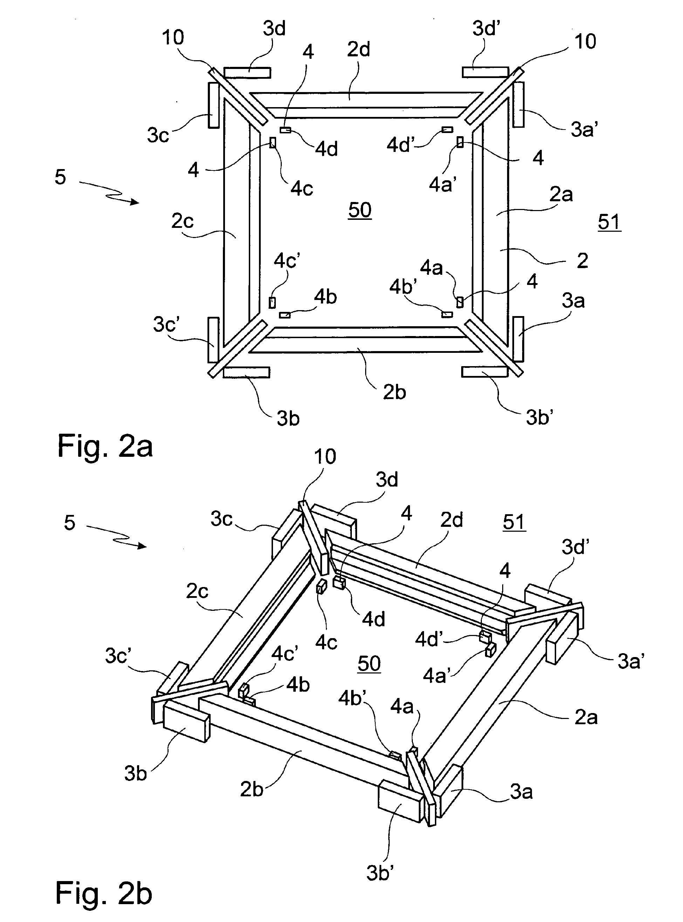

In Fig. 2a, 2b wird die Herstellung eines bevorzugt als Blendrahmen realisierten Rahmens 5 gezeigt, wobei der Blendrahmen zwei Gruppen unterschiedlich breiter Profilstäbe aufweist. Die einander gegenüberliegenden Profilstäbe 2b und 2d sowie 2a und 2c sind jeweils gleich dick, wobei das Profilstabpaar 2a und 2c breiter ist als die Profile 2b und 2d.

In Fig. 2a, 2b ist die Einlegeposition gezeigt, bei welcher ein Blendrahmen als Rahmen 5 herzustellen ist, dessen Innenmaß exakt ist. Es sind die verschiedenen Innenanschläge 4a, 4a', 4b, 4b', 4c, 4c', 4d, 4d' jeweils aktiv, das heißt, in den Innenbereich 50 des Rahmens hereingeschwenkt, wohingegen auf der Außenseite 51 die Außenanschläge 3a, 3a', 3b, 3b', 3c, 3c', 3d, 3d' angeordnet sind. So ergibt es sich, dass die einzelnen Profilstäbe 2a, 2b, 2c, 2d jeweils zwischen jeweils zwei Außenanschlägen 3 und zwei Innenanschlägen 4 liegen. In der hier gezeigten Einlegeposition sind die Profilstäbe 2a, 2b, 2c, 2d noch nicht auf das eigentlich gewünschte Maß positioniert. Die Außenanschläge 3a, 3a', 3b, 3b', 3c, 3c', 3d, 3d' sind in einer Grundposition zurückgezogen vorgehalten und es ist gut zu erkennen, dass der verbleibende Spalt zwischen den breiteren Profilen 2d, 2c und den jeweiligen Außenanschlägen 3a, 3c geringer ist als der Spalt zwischen den schmäleren Profilstäben 2b, 2d und jeweiligen Außenanschlägen 3b und 3d.

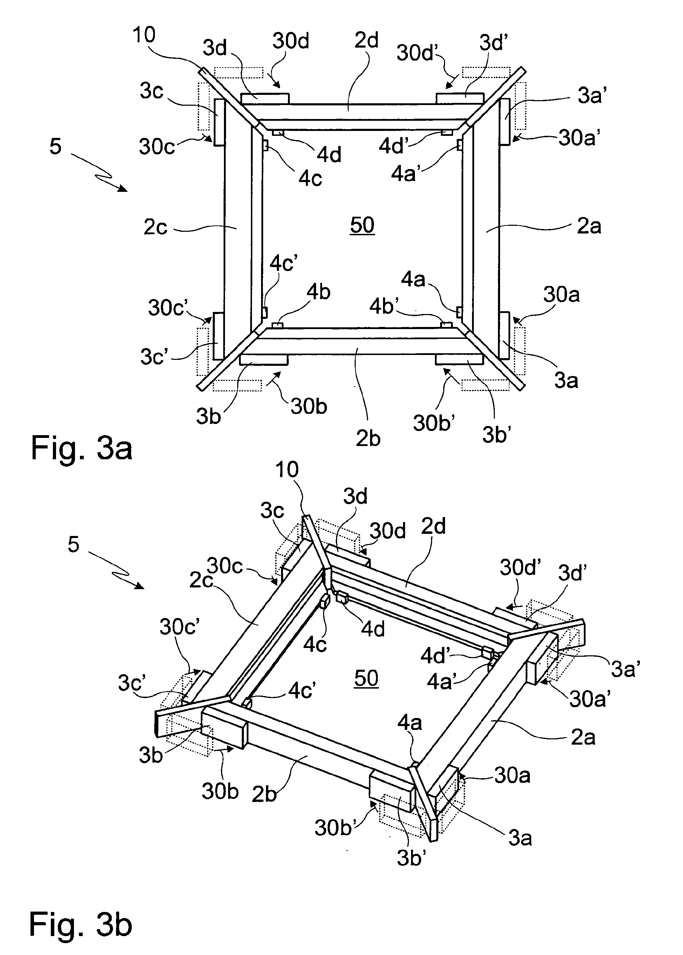

Fig. 3a, 3b zeigt zwei verschiedene Stellungen. Sie unterscheiden sich durch die gestrichelte Lage der Außenanschläge 3a, 3a', 3b, 3b', 3c, 3c', 3d, 3d'. Die Ausgangsstellung (gestrichelt) entspricht insofern der Situation in Fig. 2a, 2b, wobei die Profilstäbe 2a, 2b, 2c, 2d jetzt bereits an den Innenanschlägen 4a, 4a', 4b, 4b', 4c, 4c', 4d, 4d' anliegen. Diese Anlage kann entweder beim Einlegen bereits erreicht werden, indem die jeweiligen Profilstäbe 2a, 2b, 2c, 2d an die jeweiligen Innenanschläge 4a, 4a', 4b, 4b', 4c, 4c', 4d, 4d' herangeführt und angelegt werden oder aber die Anlage wird dadurch erreicht, dass die Außenanschläge 3a, 3a', 3b, 3b', 3c, 3c', 3d, 3d' sich jeweils nach innen bewegend den Profilstab 2a, 2b, 2c, 2d auf den Innenanschlag 4a, 4a', 4b, 4b', 4c, 4c', 4d, 4d' schieben.

Beide Varianten gehören zur Erfindung.

Die Bewegungsrichtung der einzelnen Außenanschläge 3a, 3a', 3b, 3b', 3c, 3c', 3d, 3d'sind dabei unterschiedlich. Die Außenanschläge 3a, 3a', 3b, 3b', 3c, 3c', 3d, 3d' sind jeweils im Bereich der jeweiligen Profilstabenden vorgesehen und sind in Richtung der jeweiligen Gehrungsfläche, an welcher sie enden, orientiert, wodurch sich ergibt, dass der Außenanschlag 3a, 3a', 3b, 3b', 3c, 3c', 3d, 3d' bezüglich des jeweiligen Endes des Profilstabes 2a, 2b, 2c, 2d immer in der gleichen Lage verbleibt. Die jeweiligen Bewegungsrichtungen der Außenanschläge 3a, 3a', 3b, 3b', 3c, 3c', 3d, 3d' sind durch die Pfeile 30a, 30a', 30b, 30b', 30c, 30c', 30d, 30d' angegeben. Jedoch sind die Bewegungswege derjenigen Außenanschläge, die an den schmäleren Profilstäben 2b und 2d anliegen, länger als diejenigen Bewegungswege der Außenanschläge an den breiteren Profilstäben 2a, 2c. Eine solche Kinematik ist durch die jeweils getrennte Anordnung der einzelnen Außenanschläge zueinander problemlos möglich, die Erfindung erreicht dadurch, dass mit einer solchen erfindungsgemäßen Vorrichtung problemlos auch unterschiedlich breite Profilstäbe, ohne den Einsatz von sonstigen, bekannten Zwischenlagen und dergleichen verarbeitbar sind.

Der auf das Innenmaß zu produzierende Blendrahmen definiert sein Innenmaß durch die jeweiligen Abstände der Innenanschläge 4a, 4a', 4b, 4b', 4c, 4c', 4d, 4d' untereinander. Die Bewegung der Außenanschläge 3a, 3a', 3b, 3b', 3c, 3c', 3d, 3d' erfolgt so weit, bis die Profilstäbe 2a, 2b, 2c, 2d an den jeweiligen Innenanschlägen 4a, 4a', 4b, 4b', 4c, 4c', 4d, 4d' fest anliegen. In dieser Situation, wie es in Fig. 3a, 3b gezeigt ist, werden die Außenanschläge 3a, 3a', 3b, 3b', 3c, 3c', 3d, 3d' (mit durchgehendem Strich gezeichnet) gebremst, also in ihrer Position festgehalten und somit der Profilstab 2a bis 2d zwischen dem jeweiligen Innenanschlag 4 und Außenanschlag 3 kraftschlüssig gehalten.

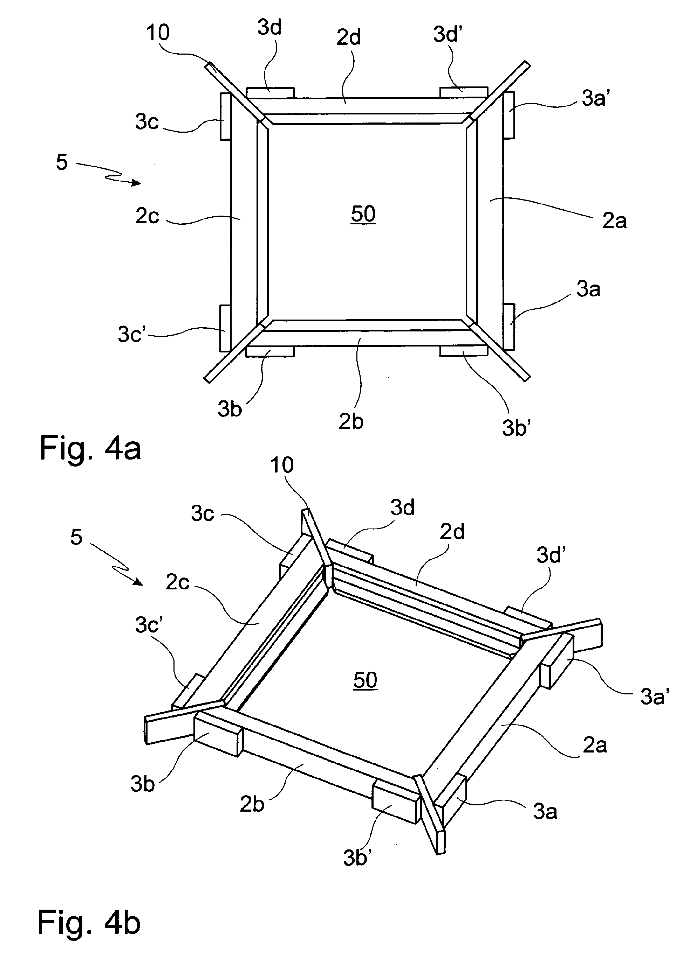

Im nächsten Schritt, wie er in Fig. 4a, 4b gezeigt ist, sind die Innenanschläge 4a, 4a', 4b, 4b', 4c, 4c', 4d, 4d' aus dem Innenraum 50 wieder entfernt, also wegbewegt und es ergibt sich die gleiche Situation wie bei dem Ausführungsbeispiel nach Fig. 1a, 1b, wobei die Lage der Profilstäbe 2a, 2b, 2c, 2d nach Fig. 3a, 3b beziehungsweise 4a, 4b nicht ursprünglich über die Lage der Außenanschläge 3a, 3a', 3b, 3b', 3c, 3c', 3d, 3d', sondern über die Lage der Innenanschläge 4a, 4a', 4b, 4b', 4c, 4c', 4d, 4d' vorgegeben wurde.

Durch diesen, dem eigentlichen Verschweißprozess bei einer mit Außenanschlägen ausgestatteten, bekannten Verschweißvorrichtung vorgeschalteten Positioniervorgang, erhöht sich die Flexibilität und der Anwendungsbereich der erfindungsgemäßen Vorrichtung erheblich.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Vorrichtung für das Verschweißen von mindestens zwei, an ihren Verbindungsenden auf Gehrung geschnittenen Profilstäben aus Kunststoff, zur Bildung eines Tür- oder Fensterrahmens oder eines Rahmenteils eines Tür- oder Fensterrahmens, bestehend aus mindestens einem Schweißkopf, sowie mindestens einem jeweils mit den Profilstäben zusammenwirkenden, bezüglich des zu bildenden Rahmens beziehungsweise Rahmenteils an den Profilstäben außenanliegenden Außenanschlages und mindestens einem, bezüglich des zu bildenden Rahmens beziehungsweise Rahmenteils auf der Innenseite an den Profilstäben anliegenden Innenanschlag zur exakten Positionierung der zu verschweißenden Profilstäbe, wobei der Innenanschlag von der Innenseite entfernbar, insbesondere verschwenkbar oder abklappbar, ist.

2. Vorrichtung nach Anspruch 1, **dadurch gekennzeichnet, dass** der Innenanschlag (4a, 4a', 4b, 4b', 4c, 4c', 4d, 4d') und/oder der Außenanschlag (3a, 3a', 3b, 3b', 3c, 3c', 3d, 3d') im Bereich der Verbindungsenden des Profilstabes (2a, 2b, 2c, 2d) mit diesem zusammenwirkt.

3. Vorrichtung nach einem oder beiden der vorhergehenden Ansprüche, **dadurch gekennzeichnet, dass** für den Innenanschlag (4a, 4a', 4b, 4b', 4c, 4c', 4d, 4d') ein Bewegungs- oder Schwenkantrieb vorgesehen ist, durch dessen Aktivierung der Innenanschlag (4a, 4a', 4b, 4b', 4c, 4c', 4d, 4d') von der Innenseite (50) des Profilstabes (2a, 2b, 2c, 2d) entfernbar ist.

4. Vorrichtung nach einem oder mehreren der vorhergehenden Ansprüche, **dadurch gekennzeichnet, dass** die Vorrichtung wahlweise zur Herstellung von auf Rahmeninnenmaß gefertigte Rahmen oder auf Rahmenaußenmaß zu fertigende Rahmen dient.

5. Vorrichtung nach einem oder mehreren der vorhergehenden Ansprüche, **dadurch gekennzeichnet, dass** die Innenanschläge (4a, 4a', 4b, 4b', 4c, 4c', 4d, 4d') derart beweglich gelagert sind, dass diese auf das jeweilige Rahmeninnenmaß positionierbar sind und/oder die Außenanschläge (3a, 3a', 3b, 3b', 3c, 3c', 3d, 3d') derart beweglich gelagert sind, dass diese auf das jeweilige Rahmenaußenmaß positionierbar sind.

6. Vorrichtung nach einem oder mehreren der vorhergehenden Ansprüche, **dadurch gekennzeichnet, dass** der Außenanschlag (3a, 3a', 3b, 3b', 3c, 3c', 3d, 3d') von außen gegen den am Innenanschlag (4a, 4a', 4b, 4b', 4c, 4c', 4d, 4d' ) anliegenden Profilstab (2a, 2b, 2c, 2d) anstellbar ist und in dieser Position durch eine Bremse in seiner Lage festlegbar ist.

7. Vorrichtung nach einem oder mehreren der vorhergehenden Ansprüche, **dadurch gekennzeichnet, dass** die Bewegungen (30a, 30a', 30b, 30b', 30c, 30c', 30d, 30d') mehrerer Außenanschläge (3a, 3a', 3b, 3b', 3c, 3c', 3d, 3d') unterschiedlich, insbesondere unterschiedlich lang sind.

8. Vorrichtung nach einem oder mehreren der vorhergehenden Ansprüche, **gekennzeichnet durch** einen pneumatischen oder elektrischen Bewegungsantrieb des Außenanschlages (3a, 3a', 3b, 3b', 3c, 3c', 3d, 3d').

9. Vorrichtung nach einem oder mehreren der vorhergehenden Ansprüche, **gekennzeichnet durch** eine mechanisch oder elektrisch wirkende Bremse.

10. Vorrichtung nach einem oder mehreren der vorhergehenden Ansprüche, **dadurch gekennzeichnet, dass** der Außenanschlag (3a, 3a', 3b, 3b', 3c, 3c', 3d, 3d') in Richtung der Gehrungsfläche längsbeweglich ist.

11. Vorrichtung nach einem oder mehreren der vorhergehenden Ansprüche, **dadurch gekennzeichnet, dass** der Außenanschlag (3a, 3a', 3b, 3b', 3c, 3c', 3d, 3d' ) am Schweißkopf angeordnet ist.

12. Vorrichtung nach einem oder mehreren der vorhergehenden Ansprüche, **dadurch gekennzeichnet, dass** für den Profilstab (2a, 2b, 2c, 2d) ein Trägerschlitten vorgesehen ist und der Trägerschlitten insbesondere rechtwinklig zur Längserstreckung des Profilstabes auf einer Bewegungsbahn beweglich ist.

13. Verfahren für das Verschweißen von mindestens zwei an ihren Verbindungsenden auf Gehrung geschnittenen Profilstäben aus Kunststoff, insbesondere mit einer Vorrichtung nach einem oder mehreren der vorhergehenden Ansprüche, zur Bildung eines Tür- oder Fensterrahmens oder eines Rahmenteils eines Tür- oder Fensterrahmens, wobei der bezüglich des zu schweißenden Rahmens oder Rahmenteiles auf der Außenseite angeordnete Außenanschlag in Abhängigkeit der Lage des bezüglich des zu schweißenden Rahmens oder Rahmenteiles auf der Innenseite angeordneten Innenanschlag und der Profilbreite des am Innenanschlag anliegenden Profilstabes positioniert und in dieser Position gebremst beziehungsweise festgelegt wird.

14. Verfahren für das Verschweißen von mindestens zwei an ihren Verbindungsenden auf Gehrung geschnittenen Profilstäben aus Kunststoff, insbesondere mit einer Vorrichtung nach einem oder mehreren der vorhergehenden Ansprüche 1 bis 13 beziehungsweise dem vorhergehenden Verfahren nach Anspruch 14, zur Bildung eines Tür- oder Fensterrahmens oder eines Rahmenteils eines Tür- oder Fensterrahmens, wobei die Profilstäbe zunächst an einem bezüglich des zu schweißenden Rahmen oder Rahmenteiles an den auf der Innenseite angeordneten Innenanschlag angelegt werden, hernach ein bezüglich des zu schweißenden Rahmens oder Rahmenteiles auf der Außenseite angeordneter Außenanschlag gegen den Profilstab bewegt wird und bei Anliegen des Außenanschlages am Profilstab der Außenanschlag auf seiner Bewegungsbahn an dieser Position gebremst wird, worauf der Innenanschlag von der Innenseite entfernt wird und hernach die Verschweißung der Profilstäbe erfolgt.

15. Verfahren nach einem oder mehreren der vorhergehenden Ansprüche 13 und 14, **dadurch gekennzeichnet, dass** vor dem Verschweißen eine Zentrierung der Profilstäbe durch, bevorzugt an den Außenanschlag angeordneten Justierelementen erfolgt.
